# EUROPEAN PATENT SPECIFICATION

(11) **EP 4 277 857 B1**
(45) Date of publication and mention of the grant of the patent: **28.01.2026**
(21) Application number: 21707181.0
(22) Date of filing: 16.02.2021
(51) Int. Cl.: B65D 41/00, C08L 23/04

(54) **TRANSPARENT LINER COMPOUNDS**
TRANSPARENTE LINER-VERBINDUNGEN
COMPOSÉS DE GARNITURE TRANSPARENTE

(43) Date of publication of application: 22.11.2023
(73) Proprietor: ACTEGA DS GmbH, 28219 Bremen (DE)
(72) Inventor: HEYDER, Simon, 27777 Ganderkesee (DE); EICHLER, Waldemar, 28777 Bremen (DE)
(74) Representative: Maiwald, Walter
(86) International application number: PCT/EP2021/053762
(87) International publication number: WO 2022/174887

(56) References cited:
- US-A1- 2016 152 808
- US-A1- 2018 057 670

## Description

The invention relates to PVC-free polymer compounds, especially for the production of liners, sealing elements and gadgets for container closures, which optimize the protection of oxygen-sensitive materials, such as foodstuffs and especially beverages, from oxygen by the combination of a passive oxygen barrier and oxygen-binding substances (scavengers) when packaged in containers for such oxygen-sensitive materials, such as beverage bottles. More specifically, the invention relates to such liners, which show improved resistance to losing transparency e. g. by becoming turbid or cloudy and thus show improved long-term transparency.

A typical foodstuff or beverage container comprises a closure preventing the loss or contamination of its contents. Again typically, this closure is provided with a liner incorporating, or formed from, a sealant which ensures a tight and lasting seal between the container and the closure. Examples of such closures comprise crown corks, twist crowns, ring-pull closures and screw caps.

An essential function of the compounds discussed here is the generation of such sealing inserts or liners in container closures. This will not only prevent the leakage of the contents (including gases like CO₂ or N₂), but also protect them from pollution caused by substances, to which the filled and closed container can be exposed, for example, during storage and transport.

Thus, a container seal or liner is inter alia intended to prevent that oxygen reaches the filling.

Another important function is to limit the unwanted ingress of volatile compounds which may originate for example from the outer packaging, such as shrink wrap, cardboard or wooden pallets. In particular, it is important that bottled beverages (beer, juices, mineral water) are sealed with bottle caps so that the ingress of TCA (trichloroanisole) and other volatile organic carbon compounds (VOC's) is suppressed.

In conventional container sealings the ingress of such substances (oxygen, TCA and the like) into the sealed container occurs, because the seal cannot prevent it. The pollutants migrate (e.g. due to their solubility in the compound) through the seal into the container and thus reach the filling good. Also undesirable is the opposite effect, namely that components of the filling penetrate the seal. This can be a problem e.g. with oily filling materials or flavored drinks.

Generic sealants which overcome such problems are known from our earlier application WO 2015/010718, or from US2018/057670A1, especially as concerns the kinds and properties of the polymers contained by the polymer compounds from which the sealants are produced.

These compounds are generally PVC-free, since PVC may cause problems in disposal or incineration, and may impede the mechanical recycling of plastic waste. Soft PVC-based sealants also generally contain plasticisers, which cause concern for health reasons. The known sealants generally match the performance characteristics of PVC-based liners and can therefore be used to replace PVC-based seals.

It is common practise to utilize container closures for providing information, such as the name of the beverage producer. E.g. the exterior of closures (such as the top exterior face of a crown cork) can be used to display the name of the manufacturer, the brand name of the product etc.

There is a desire in the industry to utilize also the interior side of a closure, i. e. the side facing the filled goods, to provide information. This information will then become accessible to the user once the closure is removed from the container.

It is thus already known to provide a QR code on the inside of a closure provided with a transparent liner, e. g. by printing the QR code onto the surface of the closure facing the container interior. The print will stay out of contact with the filled goods, since it is separated from these by the transparent liner. If the liner is sufficiently transparent, the QR code can then be seen and scanned through the liner, after the closure has been removed from the container. It should be understood that the invention is not limited to the use of QR codes; it is in fact also not limited to any specific type of information, type of closure or kind of packaged material.

However, the above-indicated technology still suffers from a variety of problems and disadvantages which may impede its usefulness.

Scanning a QR code (or a comparable item of information) through a closure liner requires the liner to be sufficiently transparent, or the scanner will not be able to clearly and completely scan the code.

Above-mentioned WO 2015/010718 discloses liner materials which are generally suitable for such scanning. These liner materials also provide highly improved protection against the ingress of oxygen. However, in some circumstances, the liner materials may turn less transparent with time, apparently through deterioration of the materials used in the liner, which while it does not generally affect the liner's sealing and oxygen barrier properties, makes it turn more opaque than is desirable for scanning, especially after extended storage.

There is therefore a need for generic liners which remain transparent for longer periods of time. We have found that increased long-term transparency can be provided by suitable choosing the type and amount of the polymers and, in case, also scavenger materials in the compound from which the liner is produced.

Suitable compounds which can be used in such liners are defined in the attached independent claims. The attached dependent claims define advantageous embodiments of such compounds.

Hereinafter a polymer compound, or simply called a compound (as is usual in the industry), is understood to be a blend of one or more polymers with other components (e.g., viscosity adjuster, extenders, fillers, pigments, scavengers, antioxidants, lubricants) which are used to adjust the desired application properties. These application properties relate to the behavior of the compound from its preparation, to the use in the production of container closures (e.g. when placing it in a closure blank to produce a sealing insert), as well as to the properties of the closure in filling and storage of the container and in its intended use (e.g. opening, removal of the beverage or foodstuff, re-closure of the container) by the consumer.

The compounds of the invention are basically comprised of a substance mixture comprising at least two or more different polymers, and besides, in case, conventional additives (antioxidants, lubricants, pigments and the like), wherein a content of scavenger material is added to the substance mixture.

The inventive compounds comprise at least one chemically non-cross linked rubbery polymer. Hydrocarbonpolymers such as butyl rubber, polyisoprene, polyisobutylene, SIBS (styrene-isobutene-butadiene-styrene block copolymer), or polybutene can be used for this purpose.

The rubbery polymer or polymers may provide sufficient barrier properties, like SIBS does. If the rubbery polymer(s) do not provide sufficient barrier properties, such barrier properties are generally provided by adding a suitable non-rubbery polymer. Polyolefins such as certain LLDPEs can be used for this purpose.

A barrier polymer within the meaning of this invention is a polymer which, unblended with other substances, provides an OTR as defined in ISO 15105-2 of less than 2000 cm³/m².d at a film thickness of 100 µm and 23°C and 100% relative humidity.

It is preferred to use SIBS as a barrier polymer.

The overall barrier properties of the compound should be such that the compound provides an OTR as defined in ISO 15105-2 of less than 2000 cm³/m².d at a film thickness of 100 µm and 23°C and 100% relative humidity.

To establish the desired hardness (and other properties), the compound furthermore comprises, preferably thermoplastic, polymers, in particular based on polyethylene. More specifically, the compounds preferably comprise, besides the barrier polymers such as SIBS, a polyolefin which serves as a hardness modifier for the compound. Often this is based on LDPE and forms the major component of the compound.

The compound may also comprise an LLDPE component, especially one produced by metallocene technology. In some preferred embodiments, the LLDPE component incorporates a copolymer, especially with octene as a comonomer.

In other preferred embodiments, the polyolefin component includes an SEBS (especially at low molecular weight, e. g. at a solution viscosity in toluene at 20 wt.% SEBS about 550 cP or less) and/or an SE(E)PS. Preferably, compounds using an SEBS softener comprise less than 1 wt.% of oil or no oil at all. Preferred compounds with an SBS softener may comprise up to, and preferably less than, 10 wt.% oil (all compositional percentages in this specification are wt.%, unless expressly defined otherwise).

The relative total content of polyolefins is preferably higher than that of the barrier polymer(s), especially SIBS. In particularly preferred embodiments, the relative content of SIBS is above 5% by weight, and below 30% by weight. More preferably it is between 5wt% and 15 wt.%, especially about 10 wt.%. By contrast, the relative total content of polyolefins is generally at least 30% by weight, preferably at least 50 wt.% and optionally at least 70% by weight or more (always based on the total weight of the final compound).

Especially preferred embodiments have about 10 wt.% barrier compound, especially SIBS; about 15 wt.% LLDPE and at least 70 wt.% LDPE. The LLDPE content may be 0 wt.%, i. e. LLDPE may be completely absent, but it is more preferred to have a (non-zero) minimum content of LLDPE.

In some preferred embodiments, the LLDPE is partly replaced by SEBS and/or SBS. Preferably the relative amounts of SEBS and/or SBS are smaller than those of LLDPE. The total amount of non-LDPE polyolefin is preferably up to 30 wt.%, preferably below 20 wt.%.

Generally, the physical properties of the compounds (hardness, elasticity) correspond to those of the compounds disclosed in above-mentioned WO2015/010718 A1. In preferred embodiments, the Shore D - hardness of the compounds is below 45. Barrier properties may be defined in terms of the Oxygen Transmission Rate OTR, which is e. g. determined using a Mocon OX-TRAN 2/60 device at 23°C, 100 % relative humidity and normalized to a film thickness of 100 µm. The relative amount of barrier polymer(s) in the compound is generally up to 20 wt.%, preferably between 5 and 15 wt.% and most preferred about 10 wt.%.

The polymer compounds of the invention comprise a scavenger component that in particular suppresses an access or ingress of oxygen into the packed food or beverage.

As this scavenger, inorganic sulfite e.g. sodium sulfite is particularly suitable. Other known scavengers such as ascorbic acid may be used as well. Suitable scavenger materials are described for example in terms of type, quantity and application in our application WO 2011/069520, which is incorporated by reference.

It is already known from WO 2011/069520 to employ a PVC-free polymer compound to which an oxygen-depleting component (which is a type of scavenger) has been added, especially for twist crown caps. Preferably, these components are sulfite particles having a particular average particle size. By the sulfite, a reduction of the oxygen ingress is achieved while the compound itself (that is, disregarding its scavenger content) need actually not to have any certain barrier functions.

The compounds referred to in WO 2011/069520 are based on polypropylene and polyethylene, esp. LDPE and LLDPE, with contents of SEBS. SEBS has no useful barrier properties. These compounds contain substantial amounts of oil. In the embodiment white oil in an amount of 34% is the largest single component. The oil content is necessary in order to obtain the required physical parameters of the compounds.

For many applications, however, any such oil content in a container sealing is undesirable. Oil can facilitate the migration of substances into and through the container sealing, which reduces the barrier properties of the seal. The resulting greater ingress of oxygen and other volatiles can affect the product properties.

In order to suppress such effects WO 2011/060803 proposed, for example, oil-free compounds especially when using fatty contents. However, barrier properties, optionally improved by scavenger substances, do not play a role. Neither is lasting transparency of the liner an issue in WO 2011/06083.

The scavenger contents of the inventive compounds are preferably low, generally between 0.2 to 2 wt.%, more preferred between 0.5 and 1.5 wt.%. It is considered advantageous to use as little scavenger as possible, since the scavenger content may contribute to loss of transparency of liners made from the compounds.

Comparative tests have been performed to illustrate aspects of the invention. In these tests, four different liner compositions were prepared from commercially available materials. Compounds formed from these materials were used as liners in conventional crown cork closures, on conventional filled bottles (beer, also mineral water) such that the liner material stayed in contact with the filled goods.

The interior side of the closures had been provided with information, i. e. a QR code (15mm by 15mm) printed on the surface of a primer varnish layer onto which the liner was applied in customary fashion.

It was tested whether the closures provided the desired oxygen barrier properties and whether the QR code could be successfully scanned through the liner after the containers had been opened by removing the closure at increasing time intervals up to 6 month after capping (typical beer shelf life).

Scanning was performed using a commercially available smartphone with a scanning functionality. The QR code comprised an internet link to an internet address. The scan was considered readable by the phone if the phone could successfully use the link to contact the address.

The results are notable from the following Table:

| **Components** | | **Reference Example 1** | **Reference Example 2** | **Reference Example 3** | **Inventive Example 4** |
|---|---|---|---|---|---|
| HDPE MFI 30 | HDPE | | 44 | | |
| HDPE MFI 2 | | | 20 | | |
| LDPE MFI 6,5 | LDPE | **37,8** | | 70,8 | 72,8 |
| Flexirene MR50 | LLDPE (C4) | **25** | | | |
| Flexirene CL 10 | | | 11,4 | | |
| Queo 0201 | LLDPE (C8) | **20** | | | |
| Queo 0230 | | | | | **15** |
| Queo 1007 | | | | 16 | |
| Taipol 6152 | SEBS | 10 | | | |
| Sibstar 102T | SIBS | | 20 | | 10 |
| Infuse 9807 | OBC | | | 10 | |
| White oil V70 | medical white oil | 5 | | | |
| Sodium sulfite | Scavenger | 1 | 4 | 3 | 1 |
| Additive | Paraffin wax | 1 | | | 1 |
| | Lubricant | | 0,2 | | |
| | Stabilizer | 0,1 | 0,1 | 0,1 | 0,1 |
| | Stabilizer | 0,1 | 0,1 | 0,1 | 0,1 |
| Total | | 100 | 100 | 100 | 100 |

| | | | | | |
|---|---|---|---|---|---|
| (All above amounts are in wt.% based on total compound) | | | | | |

In Example 1, scanning was successful, but the barrier effect of the compound was insufficient.

In Example 2, a barrier effect was provided, but the liner was too opaque for scanning.

In Example 3, the barrier effect of the compound was insufficient, and the liner was also too opaque for scanning.

Example 4 is an embodiment of the invention. A sufficient barrier effect was provided (OTR below 2000 cm³/m².d at 100 µm thickness, 23°C, 100% rel. humidity) and scanning was possible.

The compounds of the invention can be used for all kinds of bottle closures, e.g. crown corks, twist crowns, aluminum closures and caps (such as plastic caps with an internal thread). They can also be used for ring-pull caps and comparable closures.

### Embodiment Example

| | |
|---|---|
| SIBS | 10 wt.% |
| LLDPE, C8, metallocene catalyzed | 15 wt.% |
| LDPE | 73 wt.% |
| Customary Additives | 2 wt.% |

Liners with good sealing properties could be prepared from the compounds of the Embodiment Example. These liners had and retained suitability for scanning over the required duration, i. e. more than a month in typical use conditions.

## Claims

1. A polymer compound for a PVC-free sealing insert or liner of a container closure for a food or beverage container, comprising
at least one hydrocarbon barrier polymer selected from styrene-isobutene-butadiene-styrene (SIBS), styrene-ethene-propene-styrene (SEPS), styrene-ethene-ethene/propene-styrene (SEEPS), butyl rubber and polyisobutene (PIB), in an amount of between 1 and 35 wt.% based on total compound;
LDPE in an amount of between 40 and 95 wt.% based on total compound weight;
LLDPE and/or SEBS and /or an olefin block copolymer (OBC) in an amount between 0 wt.% and a total (LLDPE and/or SEBS and /or OBC) of 30 wt.%, based on total compound weight;
an oxygen scavenging material in a non-zero amount up to 2 wt.% based on total compound weight.

2. The compound of claim 1, said barrier polymer being SIBS.

3. The compound of claim 1 or 2, said at least one barrier polymer having an oxygen transmission rate (OTR) of less than 2000 cm³/m².d for a 100 µm thickness film and 23°C and 100% relative humidity.

4. The compound of claim 3, comprising at least one styrene block copolymer with less than 31 wt.% styrene content.

5. The compound of any preceding claim, said amount of LLDPE and/or SEBS and/or OBC being non-zero.

6. The compound of any preceding claim, comprising a (C4 to C8) LLDPE, preferably in an amount of 5 to 15 wt.% based on total compound, and more preferably being a random copolymer of polyethylene with octene.

7. The compound of any preceding claim, comprising at least 50 wt.%, better at least 60 wt.%, more preferred at least 65 wt.% and most preferred at least 70 wt.% LDPE based on total compound.

8. The compound of any preceding claim, comprising not more than 15 wt.%, better not more than 10 wt.%, preferably not more than 5 wt.%, more preferred not more than 1 wt.% of substances which are liquid under 1 bar pressure and at 20°C, and most preferred no such substances at all within proper analytical detection limits.

9. The compound of any preceding claim, containing 0.5 to 2 wt.% sodium sulfite based on total compound as the scavenging material, preferably in a mean particle size determined by laser diffraction of about 10 µm.

10. The compound of any preceding claim, further comprising an ethene/octene based OBC in an amount of up to 35 wt.% based on total compound.

11. A PVC-free closure liner made from a compound as defined in any one of claims 1 to 10.

12. A container closure comprising a liner made from a compound as defined in any one of claims 1 to 10.

13. The container closure of claim 12, said container being a beer bottle.

## Patentansprüche

1. Polymerverbindung für einen PVC-freien Dichtungseinsatz oder eine PVC-freie Dichtungsauskleidung eines Behälterverschlusses für einen Lebensmittel- oder Getränkebehälter, umfassend
mindestens ein Kohlenwasserstoff-Barrierepolymer, ausgewählt aus Styrol-Isobuten-Butadien-Styrol (SIBS), Styrol-Ethen-Propen-Styrol (SEPS), Styrol-Ethen-Ethen/Propen-Styrol (SEEPS), Butylkautschuk und Polyisobuten (PIB), in einer Menge von zwischen 1 und 35 Gew.-% bezogen auf die Gesamtverbindung;
LDPE in einer Menge von zwischen 40 und 95 Gew.-%, bezogen auf das Gesamtgewicht der Verbindung;
LLDPE und/oder SEBS und/oder ein Olefin-Blockcopolymer (OBC) in einer Menge von zwischen 0 Gew.-% und insgesamt (LLDPE und/oder SEBS und/oder OBC) von 30 Gew.-%, bezogen auf das Gesamtgewicht der Verbindung;
ein Sauerstoff bindendes Material in einer Menge von bis zu 2 Gew.-%, bezogen auf das Gesamtgewicht der Verbindung.

2. Verbindung nach Anspruch 1, wobei das Barrierepolymer SIBS ist.

3. Verbindung nach Anspruch 1 oder 2, wobei mindestens ein Barrierepolymer eine Sauerstoffdurchlässigkeitsrate (OTR) von weniger als 2000 cm³/m².d für einen 100 µm dicken Film und 23 °C und 100 % relativer Luftfeuchtigkeit aufweist.

4. Verbindung nach Anspruch 3, umfassend mindestens ein Styrol-Blockcopolymer mit einem Styrolgehalt von weniger als 31 Gew.-%.

5. Verbindung nach einem der vorhergehenden Ansprüche, wobei die Menge an LLDPE und/oder SEBS und/oder OBC ungleich Null ist.

6. Verbindung nach einem der vorhergehenden Ansprüche, umfassend ein (C4- bis C8-) LLDPE, vorzugsweise in einer Menge von 5 bis 15 Gew.-% bezogen auf die Gesamtverbindung, und mehr bevorzugt ein statistisches Copolymer von Polyethylen mit Octen.

7. Verbindung nach einem der vorhergehenden Ansprüche, umfassend mindestens 50 Gew.-%, besser mindestens 60 Gew.-%, mehr bevorzugt mindestens 65 Gew.-% und am meisten bevorzugt mindestens 70 Gew.-% LDPE, bezogen auf die Gesamtverbindung.

8. Verbindung nach einem der vorhergehenden Ansprüche, umfassend nicht mehr als 15 Gew.-%, besser nicht mehr als 10 Gew.-%, vorzugsweise nicht mehr als 5 Gew.-%, mehr bevorzugt nicht mehr als 1 Gew.-% Stoffe, die bei einem Druck von 1 bar und bei 20 °C flüssig sind, und am meisten bevorzugt überhaupt keine solchen Stoffe innerhalb geeigneter analytischer Nachweisgrenzen.

9. Verbindung nach einem der vorhergehenden Ansprüche, enthaltend 0,5 bis 2 Gew.-% Natriumsulfit, bezogen auf die Gesamtverbindung, als bindendes Materials, vorzugsweise mit einer mittels Laserbeugung bestimmten mittleren Teilchengröße von etwa 10 µm.

10. Verbindung nach einem der vorhergehenden Ansprüche, ferner umfassend ein auf Ethen/Octen basierendes OBC in einer Menge von bis zu 35 Gew.-%, bezogen auf die Gesamtverbindung.

11. PVC-freie Verschlussauskleidung, die aus einer Verbindung nach einem der Ansprüche 1 bis 10 hergestellt ist.

12. Behälterverschluss, umfassend eine Auskleidung, die aus einer Verbindung nach einem der Ansprüche 1 bis 10 hergestellt ist.

13. Behälterverschluss nach Anspruch 12, wobei der Behälter eine Bierflasche ist.

## Revendications

1. Composé polymère pour un insert d'étanchéité ou une doublure sans PVC d'une fermeture de contenant pour un contenant pour aliments ou boisson, comprenant
au moins un polymère barrière hydrocarboné choisi parmi un styrène-isobutène-butadiène-styrène (SIBS), un styrène-éthène-propène-styrène (SEPS), un styrène-éthène-éthène/propène-styrène (SEEPS), un caoutchouc butyle et un polyisobutène (PIB), en une quantité comprise entre 1 et 35 % en poids par rapport au composé total ;
un PEBD en une quantité comprise entre 40 et 95 % en poids par rapport au poids total du composé ;
un PEBDL et/ou un SEBS et/ou un copolymère séquencé oléfinique (OBC) en une quantité comprise entre 0 % en poids et un total (PEBDL et/ou SEBS et/ou OBC) de 30 % en poids, par rapport au poids total du composé ;
un matériau de piégeage d'oxygène en une quantité non nulle allant jusqu'à 2 % en poids par rapport au poids total du composé.

2. Composé selon la revendication 1, ledit polymère barrière étant un SIBS.

3. Composé selon la revendication 1 ou 2, ledit au moins un polymère barrière ayant un taux de transmission de l'oxygène (OTR) inférieur à 2000 cm³/m².j pour un film de 100 µm d'épaisseur, à 23 °C et à 100 % d'humidité relative.

4. Composé selon la revendication 3, comprenant au moins un copolymère séquencé de styrène avec une teneur en styrène inférieure à 31 % en poids.

5. Composé selon une quelconque revendication précédente, ladite quantité de LLDPE et/ou de SEBS et/ou d'OBC étant non nulle.

6. Composé selon une quelconque revendication précédente, comprenant un LLDPE (en C4 à C8), de préférence en une quantité de 5 à 15 % en poids par rapport au composé total, et plus préférablement étant un copolymère aléatoire de polyéthylène avec de l'octène.

7. Composé selon une quelconque revendication précédente, comprenant au moins 50 % en poids, mieux au moins 60 % en poids, plus préférablement au moins 65 % en poids et de manière préférée entre toutes au moins 70 % en poids de LDPE par rapport au composé total.

8. Composé selon une quelconque revendication précédente, comprenant pas plus de 15 % en poids, mieux pas plus de 10 % en poids, de préférence pas plus de 5 % en poids, plus préférablement pas plus de 1 % en poids de substances qui sont liquides sous une pression de 1 bar et à 20 °C, et de manière préférée entre toutes aucune de ces substances dans les limites de détection analytiques appropriées.

9. Composé selon une quelconque revendication précédente, contenant de 0,5 à 2 % en poids de sulfite de sodium par rapport au composé total comme matériau de piégeage, de préférence selon une granulométrie moyenne déterminée par diffraction laser d'environ 10 µm.

10. Composé selon une quelconque revendication précédente, comprenant en outre un OBC à base d'éthène/octène en une quantité allant jusqu'à 35 % en poids par rapport au composé total.

11. Doublure de fermeture sans PVC préparée à partir d'un composé tel que défini dans l'une quelconque des revendications 1 à 10.

12. Fermeture de contenant comprenant une doublure préparée à partir d'un composé tel que défini dans l'une quelconque des revendications 1 à 10.

13. Fermeture de contenant selon la revendication 12, ledit contenant étant une bouteille de bière.
